Europäisches Patentamt

European Patent Office

Office européen des brevets

(11) Veröffentlichungsnummer: **0 068 363**
A1

(12) **EUROPÄISCHE PATENTANMELDUNG**

(21) Anmeldenummer: 82105377.4

(22) Anmeldetag: 18.06.82

(51) Int. Cl.³: **C 02 F 3/20, C 02 F 3/16, C 02 F 3/18, C 02 F 3/30**

(30) Priorität: 20.06.81 DE 3124215

(43) Veröffentlichungstag der Anmeldung: 05.01.83
Patentblatt 83/1

(84) Benannte Vertragsstaaten: **IT**

(71) Anmelder: **Menzel GmbH. + Co., Hedelfinger Strasse 95, D-7000 Stuttgart 60 (DE)**

(72) Erfinder: **Zink, Jürgen, Schilfweg 3, D-7000 Stuttgart 70 (DE)**

(74) Vertreter: **Grupe, Peter, Dipl.-Ing. et al, Patentanwaltsbüro Tiedtke-Bühling-Kinne-Grupe-Pellmann-Grams Bavariaring 4, D-8000 München 2 (DE)**

(54) Verfahren und Vorrichtung zum Begasen einer Flüssigkeit.

(57) Bei dem Verfahren und der Vorrichtung zum Begasen einer Flüssigkeit, insbesondere Abwasser (8), gelangen Gasblasen über einen in der Flüssigkeit befindlichen gasdurchlässigen Begasungsteil (14) eines Begasungsaggregats (12, 13) in die Flüssigkeit.

Zur Erzielung eines feinstblasigen Gaseintrags erfolgt über einen Abschervorrichtungsteil (16) eine mindestens teilweise Abscherung der Gasblasen beim Austritt aus dem Begasungsteil (14).

EP 0 068 363 A1

## Verfahren und Vorrichtung zum Begasen einer Flüssigkeit

Die Erfindung betrifft ein Verfahren zum Begasen einer Flüssigkeit, insbesondere Abwasser, und eine Vorrichtung zur Durchführung des Verfahrens, wobei Gasblasen über einen in der Flüssigkeit befindlichen gasdurchlässigen Begasungsteil eines Begasungsaggregats in die Flüssigkeit gelangen.

Bei Abwasserreinigungsanlagen ist es bekannt, während der Gaseinbringung das Abwasser im Bereich des Begasungsaggregats zusätzlich zu bewegen, indem beispielsweise entsprechende Schaufelteile vorgesehen sind, die eine nicht unerhebliche, vorwiegend vertikale Wasserumwälzung im Becken verursachen. Hierbei wird weiterhin bemängelt, daß dabei ein verhältnismäßig hoher Energieaufwand erforderlich ist und daß dennoch vielfach kein zufriedenstellender Gaseintrag ins Abwasser erfolgt, da die Verteilung der Gasblasen im Abwasser nicht fein genug ist und beispielsweise auch durch zu große Luftblasenbildungen und eine vertikale Umwälzströmung des Abwassers ein zu schneller Auftrieb und damit eine zu geringe Verweilzeit im Abwasser vorliegt.

Demgemäß besteht die Aufgabe der Erfindung darin, ein Verfahren zum Begasen einer Flüssigkeit der eingangs beschriebenen Art so zu verbessern, daß eine Energieeinsparung möglich und ein intensiv feinblasiger Gaseintrag ins Abwasser erzielt wird.

Diese Aufgabe wird erfindungsgemäß dadurch gelöst, daß
über einen Abschervorrichtungsteil eine mindestens teilweise Abscherung der Gasblasen beim Austritt aus dem
Begasungsteil erfolgt.

Ein mit der Erfindung erzielter Vorteil besteht darin,
daß durch den Abschervorrichtungsteil im wesentlichen
nahe der Gasblasen-austrittsseite des Begasungsteils die
Gasblasen praktisch unmittelbar nach ihrer Entstehung
von dem Abschervorrichtungsteil zwangsweise abgeschert
werden. Das heißt, daß eine äußerst feine Gasblasenbildung
möglich ist, indem der Abschervorrichtungsteil beispielsweise unmittelbar an der Gasaustrittsseite des Begasungsteils kontaktiert. Dem austretenden Gas steht somit
praktisch nur ein äußerst geringer Zeitraum zur Gasblasenbildung zur Verfügung. Die Gasblasen können sich
deshalb kaum aufblähen und werden direkt in ihrer Entstehungsphase vom Begasungsteil abgeschert, so daß eine
ausgesprochene Feinstverteilung im Abwasser erzielt wird.
Für die Abscherung über den Abschervorrichtungsteil ist
ein nur sehr kleiner Energiebedarf erforderlich, der
praktisch vernachlässigbar gering ist, da im wesentlichen
keine Wassermassenbewegung damit durchgeführt wird und
eine in vertikaler Richtung erfolgende Wasserumwälzung
durch zusätzliche Schaufel- oder Paddelteile nicht erforderlich bzw. vermieden ist. Aufgrund des erfindungsgemäß feinstblasigen Begasungsverfahrens kann allein mit
einer vorzugsweise abdeckungsfreien Luftsauerstoffbegasung
eine optimale Aktivierung des Abwassers erzielt werden,
so daß eine ausgesprochen wirkungsvolle und kostengünstige
Wasseraufbereitung möglich ist.

0068363

Bevorzugte Ausgestaltungen und vorteilhafte Weiterbildungen des Verfahrens sowie der Vorrichtung zur
Durchführung des Verfahrens sind den Merkmalen der
Unteransprüche sowie der nachfolgenden Beschreibung
und der Zeichnung zu entnehmen, die in schematischer
Darstellung bevorzugte Ausführungsformen als Beispiel
zeigt. Es stellen dar:

Fig. 1    eine Draufsicht auf eine Abwasserreinigungsanlage mit einem um eine vertikale Achse rotierenden
          Begasungsaggregat,

Fig. 2    eine Abwasserreinigungsanlage gemäß Fig. 1, jedoch mit einem eine Horizontalachse aufweisenden
          Begasungsaggregats,

Fig. 3    eine Seitenansicht eines erfindungsgemäßen Begasungsaggregats mit einseitigem Gasaustritt,

Fig. 4    eine Seitenansicht eines weiteren Begasungsaggregats
          mit beidseitigem Gasaustritt,

Fig. 5    eine Draufsicht auf das Begasungsaggregat ähnlich

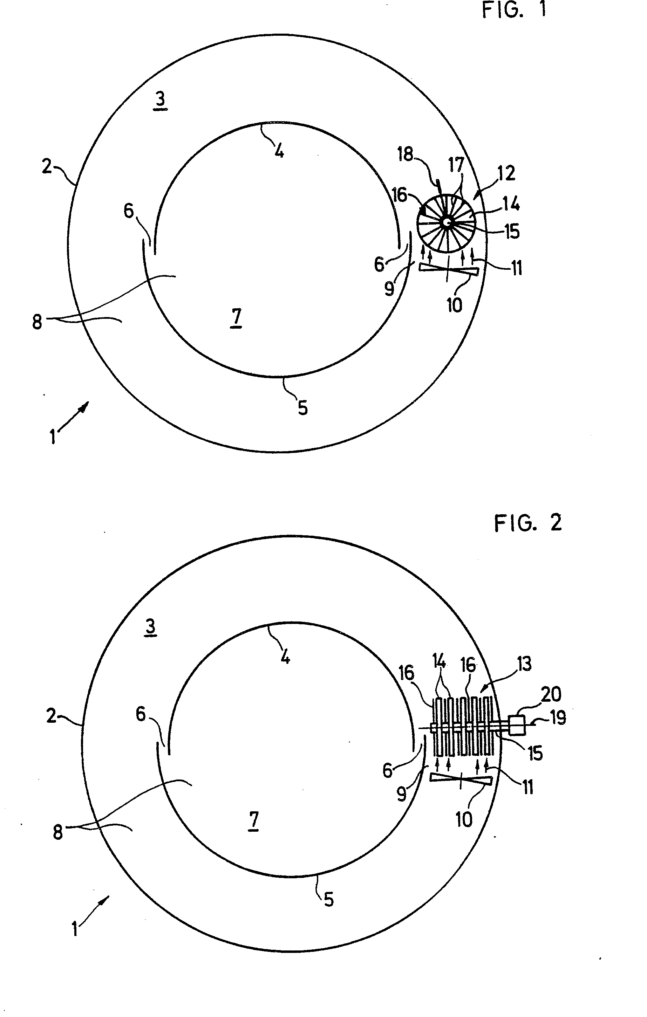

          der Fig. 1 in etwas vergrößerter Darstellung mit
          einem etwa sternförmigen Abschervorrichtungsteil,

Fi.g 6    eine Draufsicht auf ein Begasungsaggregat ähnlich
          der Fig. 5, jedoch mit einem Parallelteile aufweisenden Abschervorrichtungsteil,

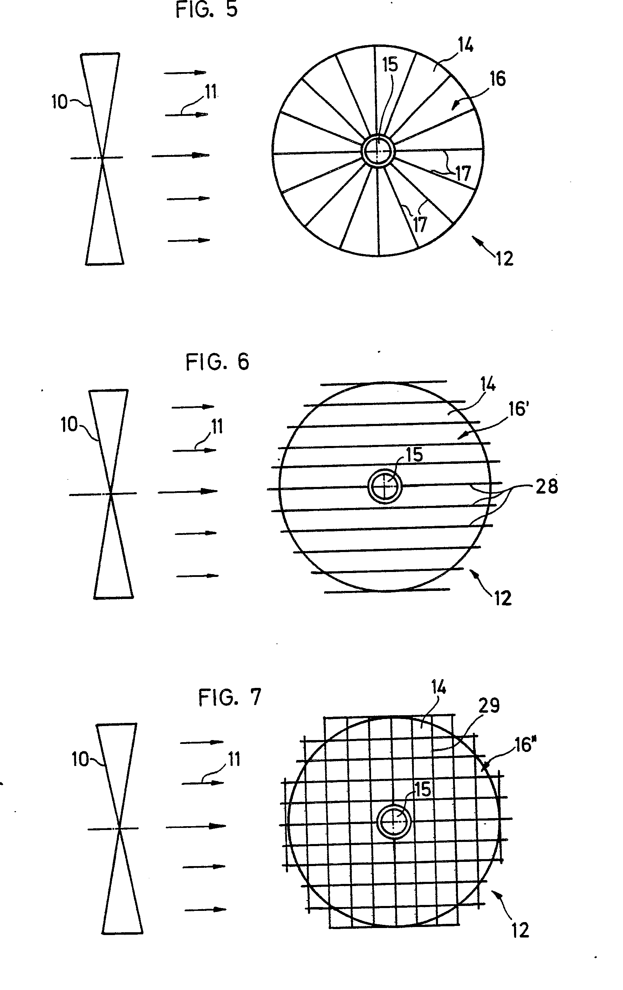

Fig. 7    eine Draufsicht auf ein Begasungsaggregat ähnlich
          der Fig. 5, jedoch mit einem gitterförmigen Abschervorrichtungsteil,

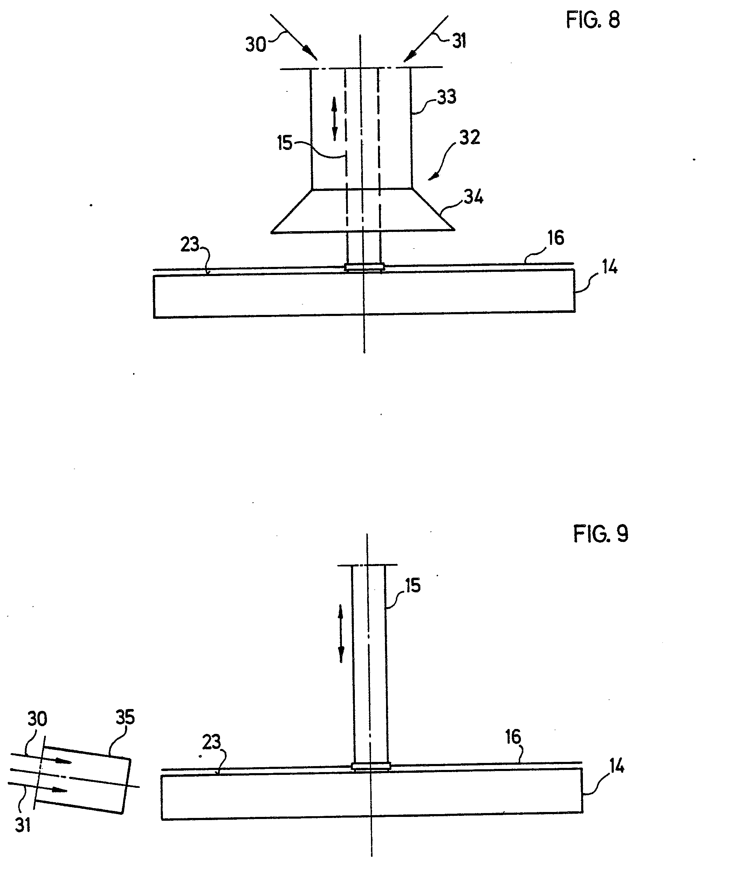

Fig. 8    eine Seitenansicht auf ein erfindungsgemäßes
          Begasungsaggregat mit einem als Fallrohr ausgebildeten Schlammzuführrohr und

Fig. 9    eine Seitenansicht eines Begasungsaggregats gemäß
          Fig. 8, jedoch mit im wesentlichen horizontal
          zur Drehbelüfterebene gerichteten Schlammzuführrohr.

Die in den Figuren 1 und 2 dargestellte Abwasserreinigungsanlage 1 weist ein durch eine Außenwandung 2 begrenztes
kreisförmiges Belebungsbecken 3 auf, in dem halbschalenförmige Wandteile 4,5 angeordnet sind, die verschieden
groß sind und sich an ihren Endbereichen etwas auf Abstand überlappen, so daß Wandöffnungen 6 gebildet sind.
Die Wandteile 4,5 begrenzen ein Denitrifikationsbecken
7, in dem sich ebenso wie im Belebungsbecken 3 aufzubereitendes Abwasser 8 befindet.

Im Bereich einer Engstelle 9 zwischen dem Wandteil 5
und der Außenwandung 2 ist ein als Propeller ausgebildeter Strömungserzeuger 10 angeordnet, der um eine
horizontale Achse rotiert und das Abwasser 8 in eine
durch Pfeile verdeutlichte Strömung 11 versetzt.

Unmittelbar hinter dem Strömungserzeuger 10 ist ein Begasungsaggregat 12,13 im Belebungsbecken 3 angeordnet.
Die Begasungsaggregate 12,13 sind vorteilhaft als Drehbelüfter ausgebildet und besitzen scheibenförmige Begasungsteile 14, die an einer rotierenden Hohlwelle 15
angeordnet sind. Durch die Hohlwelle 15 wird Luftsauerstoff zugeführt, der durch die Begasungsteile 14 ins Abwasser 8 eingebracht wird. Damit der Luftsauerstoff auch
ausgesprochen feinstblasig ins Abwasser 8 eingebracht

0068363

werden kann, ist in einer Ebene parallel neben den Gasaustrittsseiten der Begasungsteile 14 jeweils ein Abschervorrichtungsteil 16 angeordnet. Durch die Abschervorrichtungsteile 16 werden die austretenden Gasblasen
bereits in ihrer ersten Entstehungsphase sehr fein vom
Begasungsteil 14 abgeschert, wobei für diesen Abschervorgang ein nur sehr kleiner, praktisch zu vernachlässigender Energiebedarf erforderlich ist, so daß ein
sowohl wirkungsvoller als auch kostensparender Luftsauerstoffeintrag in das Abwasser möglich ist.

Dabei kann anstelle des Begasungsteils 14 auch der Abschervorrichtungsteil 16 rotieren. Es ist aber auch
möglich, sowohl den Begasungsteil 14 als auch den Abschervorrichtungsteil 16 rotieren zu lassen und dabei
vorzugsweise in entgegengesetzten Drehrichtungen mit
kreisbahnförmiger Abscherung zu bewegen. Bei der Ausführung der Fig. 1 ist die Hohlwelle 15 des Begasungsaggregats 12 vertikal angeordnet, so daß die Abscherbewegung des Begasungsteils 14 bzw. des Abschervorrichtungsteils 16 in einer Horizontalebene um eine
Vertikalachse drehend erfolgt. Außerdem ist zu erkennen, daß der Abschervorrichtungsteil der Fig. 1
sternförmig bzw. speichenradförmig angeordnete Abscherstreben 17 aufweist. Außerdem besitzt der Abschervorrichtungsteil 16, der an der Hohlwelle 15 frei
drehbar gelagert ist, ein Strömungsruder 18, das ins
Abwasser 8 eingetaucht ist und somit den Abschervorrichtungsteil 16 gegen ein unbeabsichtigtes Drehen
stabilisiert. Beim Ausführungsbeispiel der Fig. 2 ist
die Hohlwelle 15 des Begasungsaggregats 13 um eine
Horizontalachse 19 rotierend gelagert, so daß die Abscherbewegung zwischen den Begasungsteilen 14 und den
Abschervorrichtungsteilen 16 in einer Vertikalebene erfolgt. Die Fig. 2 zeigt deutlich, daß auf der Hohlwelle 15, die von einem Motor 20 getrieben wird, in
Axialrichtung mehrere Begasungsteile 14 scheibenförmig
parallel nebeneinander angeordnet sind. Außerdem ist
zu erkennen, daß jeweils zwischen zwei Begasungsteilen
14 je ein Abschervorrichtungsteil 16 angeordnet ist.
Zudem bilden zwei weitere Abschervorrichtungsteile 16
den Abschluß an beiden äußeren Stirnseiten des Begasungsaggregats 13.

Die Figuren 1 und 2 verdeutlichen darüber hinaus, daß
die Strömung 11 des Abwassers 8 vorteilhaft rechtwinklig
zur Austrittsrichtung der Gasblasen aus dem Begasungsteil 14 und im wesentlichen parallel zu dessen Ebene
sowie parallel zur Ebene des Abschervorrichtungsteils
16 gerichtet ist. Da der Strömungserzeuger 10 vorteilhaft um eine horizontale Achse rotiert, erfolgt der
parallel zum Abschervorrichtungsteil gerichtete Strömungsverlauf im wesentlichen in horizontaler Richtung, wodurch stets weitgehend gleichbleibende bzw. ausgeglichene Bedingungen gegeben sind. Bei den vorliegenden
Ausführungsbeispielen ist der Strömungserzeuger 10 den
Begasungsaggregaten 12,13 vorgelagert. Das heißt, daß
die Begasungsaggregate 12,13 hinter der Druckseite des
Strömungserzeugers 10 sich befinden. Es liegt aber auch
im Rahmen der Erfindung, den Strömungserzeuger 10 in
Strömungsrichtung hinter dem Begasungsaggregat 13,12
anzuordnen, so daß letzteres vor der Saugseite des
Strömungserzeugers 10 liegt. Der Abstand zwischen dem
Strömungserzeuger 10 und dem Begasungsaggregat 12,13
kann vorteilhaft entsprechend den jeweiligen Erfordernissen veränderbar bzw. anpaßbar sein, wobei es jedoch
günstig sein dürfte, das Begasungsaggregat 12,13 im
wesentlichen im Bereich der höchsten Strömungsgeschwindigkeit

0068363

des Abwassers 8 anzuordnen. Die Teile können somit
eventuell ganz dicht hintereinander liegen oder auch
bei entsprechender Strömungsführung einen größeren
Abstand zueinander haben. Zur Erzielung einer hohen
Leistungsfähigkeit befindet sich der Strömungserzeuger
10 im wesentlichen in gleicher Ebene mit dem Belüfteraggregat 12,13. Bei beiden Ausführungsformen gemäß den
Figuren 1 und 2 befinden sich die Begasungsaggregate
12,13 mit den Begasungsteilen 14 und Abschervorrichtungsteilen 16 nahe der einen Wandöffnung 6 des Denitrifikationsbeckens 7 zum Belebungsbecken 3.

Die Begasungsaggregate 12,13 sind zweckmäßig so ausgeführt, daß zumindest der Begasungsteil 14 im Abwasser 8
höhenverstellbar ist. Dabei ist es vorteilhaft, während
einer Denitrifikationsphase des Abwassers 8 den Begasungsteil 14 in Richtung zur Wasseroberfläche so weit anzuheben, daß er dicht unter der Wasseroberfläche verbleibt,
wobei der Gasblasenaustritt auf ein Minimum reduziert
wird. Es liegt im Rahmen der Erfindung, den Begasungsteil 14 auch ganz aus dem Abwasser 8 herauszuheben und
die Gaszufuhr völlig abzuschalten. Damit ist in einem
einzigen Becken sowohl eine Belüftung des Abwassers für
den Belebtschlamm zur Aktivierung der Mikroorganismen
als auch eine Unterbrechung dieser Phase möglich, so
daß eine Denitrifikation über einen vorgegebenen Zeitraum erfolgen kann. Wird der Begasungsteil 14
für die Denitrifikationsphase dicht unter der Wasseroberfläche gehalten, so ist gewährleistet, daß auch
bei niedrigen Außentemperaturen im Winter keine Vereisung am Begasungsteil 14 auftritt, wobei durch die
minimale Gaszuführung ein Verstopfen der Gasaustrittsporen unterbunden ist. Wird der Begasungsteil 14 bis
über die Wasseroberfläche angehoben, so ist es vorteilhaft,

0068363

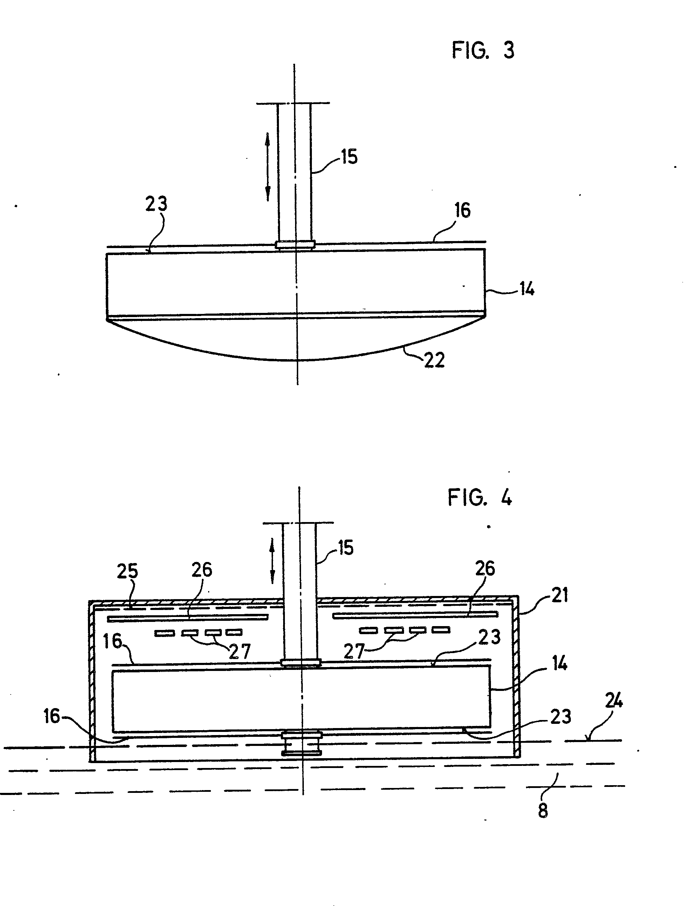

eine Abdeckhaube 21 (Fig. 4) vorzusehen, die den Begasungsteil 14 nach außen abschirmt und mit ihrem unteren Randbereich vorteilhaft gerade in das Abwasser 8 eintaucht. Hierbei kann der Begasungsteil 14 völlig stillgesetzt werden.

Aufgrund des erfindungsgemäßen Begasungsverfahrens und der damit verbundenen hohen Sauerstoffausnutzung kann es günstig sein, den Begasungsteil 14 etwa im oberen Zweidrittel-Bereich, vorzugsweise in der oberen Hälfte des Abwassers 8 zu betreiben, so daß aufgrund der geringen Eintauchtiefe auch nur eine verhältnismäßig geringe Betriebsleistung erforderlich ist. Die feinstblasige Belüftung ist hier in jedem Falle gewährleistet. Darüber hinaus ist es bei Abwasserreinigungsanlagen im Rahmen der Erfindung aber auch möglich, den Begasungsteil 14 unten dicht über dem Boden des Beckens zu betreiben, wodurch erreicht wird, daß die Verweilzeit der Gasblasen im Abwasser 8 ausgesprochen lang ist und keine Aufwirbelung an der Wasseroberfläche auftritt und etwaige Geruchsbeeinträchtigungen der Umgebungsluft weitgehend vermieden sind. Für die Höhenverstellung sind der Begasungsteil 14 und der Abschervorrichtungsteil 16 vorzugsweise an einem Vertikalspindeltrieb gelagert.

Der Fig. 3 ist zu entnehmen, daß der um die Achse rotierende Begasungsteil 14 an seiner dem Abschervorrichtungsteil 16 gegenüberliegenden Seite eine Verteilerkappe 22 hat, die das durch die Hohlwelle 15 zugeführte Belüftungsgas gleichmäßig durch den Begasungsteil 14 verteilt. Der Abschervorrichtungsteil 16 ist in geringem Abstand an der Hohlwelle 15 freidrehend über der oberen Gasaustrittsseite 23 des Begasungsteils 14 gelagert. Der

Abschervorrichtungsteil 16 ist vorteilhaft in Axialrichtung an der Hohlwelle 15 im Bereich von 0 bis etwa
100 mm , vorzugsweise 0 bis 10 mm einstellbar, so daß
der Abstand des Abschervorrichtungsteils 16 zur Gasaustrittsseite 23 in diesem Bereich entsprechend den
jeweiligen Erfordernissen regelbar ist. Der Doppelpfeil
neben der Hohlwelle 15 deutet an, daß der Begasungsteil
14 im Abwasser höhenverstellbar ist und bis über die
Wasseroberfläche herausgehoben werden kann.

Der Fig. 4 ist zu entnehmen, daß der Begasungsteil 14
neben der oberen und der unteren Gasaustrittsseite 23
jeweils einen Abschervorrichtungsteil 16 aufweist, die
beide unabhängig voneinander an der Hohlwelle 15 freidrehend und auf Abstand verstellbar gelagert sind. Der
Begasungsteil 14 ist beim vorliegenden Ausführungsbeipiel für eine Denitrifikation des Abwassers 8 so
weit nach oben gehoben worden, daß er sich dicht über
der Oberfläche 24 des Abwassers 8 befindet. Dabei ist
der Begasungsteil 14 von einer Abdeckhaube 21 überdeckt,
die mit ihrem unteren Rand etwas in das Abwasser 8 eintaucht. Unter der Oberwandung der Abdeckhaube 21 ist
eine Wärmeisolierung 25 vorgesehen. Darunter ist ein
Heizelement 26 angeordnet, das bei Winterbetrieb eingeschaltet werden kann und ein Einfrieren verhindert.
Unter dem Heizelement 26 befindet sich ein brausenähnlicher Berieselungsteil 27, über den Wasser auf
den Begasungsteil 14 gesprüht werden kann, so daß
hierdurch ebenfalls eine Vereisung verhindert werden
kann. Das Heizelement 26 und der Berieselungsteil 27
können zusammen oder auch unabhängig voneinander betrieben werden.

Die Figuren 5,6 und 7 zeigen nochmals in etwas vergrößerter Darstellung die schematische Anordnung des Strömungserzeugers 10 und des Begasungsteils 14 mit dem Abschervorrichtungsteil 16 . Dabei wird die Strömung 11
von der Druckseite des propellerartigen Strömungse
erzeugers 10 gegen den Begasungsteil 14 gedrückt. Der
Abschervorrichtungsteil 16 in Fig. 5 ist sternförmig
ausgeführt und besitzt ähnlich einem Speichenrad abstrebende Abscherstreben 17. Bei der Ausführungsform
der Fig. 6 weist der Abschervorrichtungsteil 16'
Linearstreben 28 auf, die parallel nebeneinander in
Richtung der Strömung 11 angeordnet sind. Das Ausführungsbeispiel gemäß der Fig. 7 zeigt einen über
dem Begasungsteil 14 angeordneten Abschervorrichtungsteil 16'', der als Gitter 29 ausgebildet ist, wobei
die Gitteröffnungen je nach Erfordernis  groß oder
auch engmaschig sein können.

Den Figuren 8 und 9 ist zu entnehmen, daß insbesondere
beim erfindungsgemäßen Verfahren sowohl der Zulaufschlamm 30 als auch der Rücklaufschlamm 31 so in das
Belebungsbecken 3 eingebracht werden können, daß der
Eintrag dicht neben dem Begasungsteil 14 erfolgt. Bei
der Ausführung gemäß der Fig. 8 ist dazu das den Zulaufschlamm 30 und den Rücklaufschlamm 31 einbringende
Schlammzuführrohr 32 als im wesentlichen vertikales
Fallrohr 33 ausgeführt, welches die Hohlwelle 15 koaxial
umgibt und einen trichterförmig vergrößerten Auslaufteil 34 besitzt, so daß die Schlämme optimal verteilt
werden. Beim Ausführungsbeispiel der Fig. 9 ist das
Schlammzuführrohr 35 mit seiner Mündung dicht neben
dem Außenumfang des als Drehbelüfter ausgeführten Begasungsteils 14 angeordnet. Dadurch werden der Zulaufschlamm 30 und der Rücklaufschlamm 31 im wesentlichen
horizontal in der Ebene des scheibenförmigen

0068363

Begasungsteils 14 in das Abwasser eingebracht. Durch
die Einbringung der Schlämme unmittelbar neben dem
Begasungsteil 14 sind optimale Bedingungen in der
Zone der höchsten Sauerstoffsättigung und gleichzeitig größten Turbulenz für einen Stoffaustausch der
Bakterien gegeben. Es liegt somit zum einen eine
große Sauerstoffzufuhr für die Bakterien vor und
zum anderen ist durch die unmittelbar direkte Abwasserzufuhr das Substrat für die Bakterien ebenfalls direkt
vorhanden. Dabei besteht die vorteilhafte Möglichtkeit,
durch eine gleichzeitig unmittelbare Einleitung des
Rücklaufschlamms die Menge der Bakterien im Sauerstoff-
und Turbulenzaktivbereich zu vergrößern.

Patentansprüche

1. Verfahren zum Begasen einer Flüssigkeit, insbesondere Abwasser, wobei Gasblasen über einen in der Flüssigkeit befindlichen gasdurchlässigen Begasungsteil eines Begasungsaggregats in die Flüssigkeit gelangen, dadurch gekennzeichnet, daß über einen Abschervorrichtungsteil (16) eine mindestens teilweise Abscherung der Gasblasen beim Austritt aus dem Begasungstei(14) erfolgt.

2. Verfahren nach vorstehendem Anspruch, dadurch gekennzeichnet, daß zur Abscherung der Gasblasen der Begasungsteil (14) und/oder der Abschervorrichtungsteil (16) im wesentlichen quer zur Gasaustrittsrichtung gegeneinander bewegt werden.

3. Verfahren nach einem der vorstehenden Ansprüche, dadurch gekennzeichnet, daß die Abscherbewegung des Begasungsteils (14) und/oder des Abschervorrichtungsteils (16) im wesentlichen kreisbahnförmig verläuft.

4. Verfahren nach einem der vorstehenden Ansprüche, dadurch gekennzeichnet, daß die Abscherbewegung des Begasungsteils (14) und/oder des Abschervorrichtungsteils
(16) um eine Vertikalachse im wesentlichen in einer Horizontalebene erfolgt.

5. Verfahren nach einem der vorstehenden Ansprüche,
dadurch gekennzeichnet, daß die Abscherbewegung des
Begasungsteils (14) und/oder des Abschervorrichtungsteils (16) um eine Horizontalachse (19) im wesentlichen
in einer Vertikalebene erfolgt.

6. Verfahren nach einem der vorstehenden Ansprüche,
dadurch gekennzeichnet, daß eine variable Abscherintensität der Gasblasen vom Begasungsteil (14) durch
eine Abstandsänderung zum Abschervorrichtungsteil (16)
einstellbar ist.

7. Verfahren nach einem der vorstehenden Ansprüche,
dadurch gekennzeichnet, daß eine Strömung (11) des
Abwassers (8) quer zur Austrittsrichtung der Gasblasen
aus dem Begasungsteil (14) und im wesentlichen parallel
zur Ebene des Abschervorrichtungsteils (16) gerichtet
ist.

8. Verfahren nach einem der vorstehenden Ansprüche,
dadurch gekennzeichnet, daß die Strömung (11) des Abwassers (8) parallel zum Abschervorrichtungsteil (16)
im wesentlichen horizontal erfolgt.

9. Verfahren nach einem der vorstehenden Ansprüche,
dadurch gekennzeichnet, daß während einer Denitrifikationsphase des Abwassers (8) der Begasungsteil (14)
in Richtung zur Oberfläche (24) des Abwassers (8) angehoben bzw. herausgehoben wird, wobei der Austritt der Gasblasen weitgehend reduziert bzw. vollständig unterbunden wird.

10. Verfahren nach einem der vorstehenden Ansprüche, dadurch gekennzeichnet, daß Zulaufabwasser mit Zulaufschlamm (30) und/oder Rücklaufschlamm (31) nahe bzw. dicht neben dem Begasungsteil (14) ins Belebungsbecken (3) eingebracht wird.

11. Vorrichtung zur Durchführung des Verfahrens, dadurch gekennzeichnet, daß der Abschervorrichtungsteil (16) in einer Ebene parallel neben der Gasaustrittsseite des Begasungsteils (14) angeordnet ist.

12. Vorrichtung nach vorstehendem Anspruch, dadurch gekennzeichnet, daß der Begasungsteil (14) im wesentlichen als Scheibe ausgeführt und mit einer Gas zuführenden angetriebenen Hohlwelle (15) als rotierender Drehbelüfter ausgebildet ist.

13. Vorrichtung nach einem der vorstehenden Ansprüche, dadurch gekennzeichnet, daß der Abschervorrichtungsteil (16) an der Hohlwelle (15) gelagert ist.

14. Vorrichtung nach einem der vorstehenden Ansprüche, dadurch gekennzeichnet, daß der Abschervorrichtungsteil (16) an der Hohlwelle (15) in deren Axialrichtung zur Gasaustrittsseite (23) des Begasungsteils (14) im Abstand von 0 bis 100 mm, vorzugsweise 0 bis 10 mm, einstellbar ist.

15. Vorrichtung nach einem der vorstehenden Ansprüche, dadurch gekennzeichnet, daß der Begasungsteil (14) an einer dem Abschervorrichtungsteil (16) abgewandten Seite eine Verteilerkappe (22) aufweist.

- 15 -

0068363

16. Vorrichtung nach einem der vorstehenden Ansprüche, dadurch gekennzeichnet, daß der Begasungsteil (14) zwei Gasaustrittsseiten (23) aufweist und daß neben beiden Gasaustrittsseiten (23) je ein Abschervorrichtungsteil (16) angeordnet ist.

17. Vorrichtung nach einem der vorstehenden Ansprüche, dadurch gekennzeichnet, daß auf der Hohlwelle (15) in deren Axialrichtung mehrere Bagasungsteile (14) scheibenförmig parallel nebeneinander angeordnet sind und daß zwischen zwei Begasungsteilen (14) mindestens je ein Abschervorrichtungsteil (16) angeordnet ist.

18. Vorrichtung nach einem der vorstehenden Ansprüche, dadurch gekennzeichnet, daß der Begasungsteil (14) mit dem Abschervorrichtungsteil (16) im Abwasser (8) höhenverstellbar gelagert ist.

19. Vorrichtung nach einem der vorstehenden Ansprüche, dadurch gekennzeichnet, daß der Begasungsteil (14) und der Abschervorrichtungsteil (16) an einem Vertikalspindeltrieb gelagert sind.

20. Vorrichtung nach einem der vorstehenden Ansprüche, dadurch gekennzeichnet, daß der Begasungsteil (14) mit dem Abschervorrichtungsteil (16) im oberen 2/3-Bereich des Abwasserstandes, vorzugsweise in der oberen Hälfte des Abwassers (8) in Betriebsfunktion angeordnet ist.

21. Vorrichtung nach einem der vorstehenden Ansprüche, dadurch gekennzeichnet, daß der Begasungsteil (14) unmittelbar unter der Oberfläche (24) des Abwassers (8) in Betriebsfunktion angeordnet ist.

22. Vorrichtung nach einem der vorstehenden Ansprüche, dadurch gekennzeichnet, daß der Abschervorrichtungsteil (16) im wesentlichen sternförmig angeordnete Abscherstreben (17) aufweist.

23. Vorrichtung nach einem der vorstehenden Ansprüche, dadurch gekennzeichnet, daß der Abschervorrichtungsteil (16') im wesentlichen parallel nebeneinander angeordnete Linearstreben (28) aufweist.

24. Vorrichtung nach einem der vorstehenden Ansprüche, dadurch gekennzeichnet, daß der Abschervorrichtungsteil (16'') als Gitter ausgeführt ist.

25. Vorrichtung nach einem der vorstehenden Ansprüche, dadurch gekennzeichnet, daß dem an der Hohlwelle (15) frei drehbar gelagerten Abschervorrichtungsteil (16) ein Strömungsruder (18) im Abwasser (8) zugeordnet ist.

26. Vorrichtung nach einem der vorstehenden Ansprüche, dadurch gekennzeichnet, daß dem Begasungsteil (14) mit Abschervorrichtungsteil (16) ein vorzugsweise als Propeller ausgebildeter Strömungserzeuger (10) im Abwasser (8) zugeordnet ist.

27. Vorrichtung nach einem der vorstehenden Ansprüche, dadurch gekennzeichnet, daß der Strömungserzeuger (10) dem Begasungsteil (14) in Strömungsrichtung gesehen vorgelagert ist.

28. Vorrichtung nach einem der vorstehenden Ansprüche, dadurch gekennzeichnet, daß der Begasungsteil (14) vor der Saugseite des Strömungserzeugers (10) im Abwasser (8) angeordnet ist.

29. Vorrichtung nach einem der vorstehenden Ansprüche, dadurch gekennzeichnet, daß der Begasungsteil (14) im Bereich der höchsten Strömungsgeschwindigkeit des Abwassers (8) dem Strömungserzeuger (10) zugeordnet ist.

30. Vorrichtung nach einem der vorstehenden Ansprüche, dadurch gekennzeichnet, daß der Begasungsteil (14) im wesentlichen in einer Ebene mit dem Strömungserzeuger (10) angeordnet ist.

31. Vorrichtung nach einem der vorstehenden Ansprüche, dadurch gekennzeichnet, daß der Strömungserzeuger (10) im Bereich einer Engstelle (9) zweier Wände (2,5) eines Belebungsbeckens (3) angeordnet und der Begasungsteil (14) mit dem Abschervorrichtungsteil (16) in Strömungsrichtung dahinter gelagert ist.

32. Vorrichtung nach einem der vorstehenden Ansprüche, dadurch gekennzeichnet, daß der Begasungsteil (14)mit dem Abschervorrichtungsteil (16) nahe einer Wandöffnung (6) eines Denitrifikationsbeckens (7) zum Belebungsbecken (3) in letzterem angeordnet ist.

33. Vorrichtung nach einem der vorstehenden Ansprüche, dadurch gekennzeichnet, daß dem Begasungsaggregat (12, 13) ein nahe dem Begasungsteil (14) mündendes Schlammzuführrohr (32,35) zugeordnet ist.

34. Vorrichtung nach einem der vorstehenden Ansprüche, dadurch gekennzeichnet, daß das Schlammzuführrohr (32) als mit der Hohlwelle (15) des Begasungsteils (14) koaxiales Fallrohr (33) ausgebildet ist.

0068363

FIG. 1

FIG. 2

0068363

FIG. 3

FIG. 4

FIG. 5

FIG. 6

FIG. 7

FIG. 8

FIG. 9

**Europäisches**
**Patentamt**

**EUROPÄISCHER RECHERCHENBERICHT**

006836?

Nummer der Anmeldung

EP 82 10 5377

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-2 120 362 (UNION CARBIDE) <br><br> * Seite 10, Zeile 11 - Seite 18 * <br><br> --- | 1-4,11 ,16,22 | C 02 F 3/20 <br> C 02 F 3/16 <br> C 02 F 3/18 <br> C 02 F 3/30 |
| X | CH-A- 379 445 (ESCHER WYSS) <br><br> * Seite 3, Zeile 75 - Seite 4, Zeile 16 * <br><br> --- | 1,4,10 ,12,20 ,21,33 | |
| X | US-A-3 630 498 (NAMCO) <br><br> * Spalte 4, Zeile 67 - Spalte 5, Zeile 36 * <br><br> --- | 1-4,10 ,11,16 ,24 | |
| A | DE-A-2 909 724 (STEINMANN + ITTIG) <br> * Seite 12, Ansprüche 1-6; Seite 6, letzter Absatz - Seite 7, Zeile 11; Seite 11, Zeile 10 - Seite 13, Absatz 1 * <br><br> --- | 7-9 | RECHERCHIERTE SACHGEBIETE (Int. Cl. ³) |
| A | DE-B-1 203 189 (A. RIEBER) <br> * Spalte 2, Zeile 20 - Spalte 3, Zeile 3 * <br><br> --- | 34 | C 02 F |
| A | CH-A- 613 383 (RECENTEC) <br><br> * Seite 2, Ansprüche 1,4,6,7,16 * <br><br> --- | 9,18, 19 | |
| A | US-A-1 374 446 (W. GREENAWALT) <br><br> --- <br><br> -/- | 16 | |

Der vorliegende Recherchenbericht wurde für alle Patentansprüche erstellt.

| Recherchenort | Abschlußdatum der Recherche | Prüfer |
|---|---|---|
| DEN HAAG | 15-09-1982 | TEPLY J. |

**KATEGORIE DER GENANNTEN DOKUMENTEN**
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

.......................................................

& : Mitglied der gleichen Patentfamilie, übereinstimmendes Dokument

EPA Form 1503. 03.82

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | CH-A- 290 287 (KERAG) <br> * Figur 7 * | 5 | |
| | --- | | |
| P,A | EP-A-0 047 921 (MEUREL) <br><br> * Seite 6, Absatz 2; Seite 8, Zeile 12 - Seite 10, Zeile 22 * | 7-9,26 -30 | |
| | --- | | |
| P,A | US-A-4 290 884 (CLEVEPAK) <br> * Spalte 2, Zeile 30 - Spalte 3, Zeile 57 * | 31,32 | |
| | --- | | |
| P,A | GB-A-2 080 276 (SIMON-HARTHEY) <br> * Seite 2, Zeilen 25-42 * | 31,32 | |
| | --- | | |
| P,A | US-A-4 294 696 (WATER POLUTION CONTROL CORP.) | 9,20, 21 | |
| | ----- | | RECHERCHIERTE SACHGEBIETE (Int. Cl. 3) |

Der vorliegende Recherchenbericht wurde für alle Patentansprüche erstellt.

| Recherchenort <br> DEN HAAG | Abschlußdatum der Recherche <br> 15-09-1982 | Prüfer <br> TEPLY J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503. 03.82